# EUROPEAN PATENT APPLICATION

(11) **EP 4 108 933 A1**
(43) Date of publication of application: **28.12.2022**
(21) Application number: 21757931.7
(22) Date of filing: 16.02.2021
(51) Int. Cl.: F04D 29/00, F04D 29/056, H02K 7/08, H02K 7/14, H02K 16/04

(54) **COMPRESSOR**

(30) Priority: 17.02.2020 JP 2020024633
(71) Applicant: Daikin Industries, Ltd., Osaka-shi, Osaka 530-8323 (JP)
(72) Inventor: HIRANO, Masaki, Osaka-shi, Osaka 530-8323 (JP); YAMAGIWA, Akio, Osaka-shi, Osaka 530-8323 (JP); KIDO, Naohiro, Osaka-shi, Osaka 530-8323 (JP); HIBINO, Hiroshi, Osaka-shi, Osaka 530-8323 (JP)
(74) Representative: Goddar, Heinz J.
(86) International application number: PCT/JP2021/005782
(87) International publication number: WO 2021/166920

(57) **Abstract**

A compressor has: a motor that has a stator provided around an axis of a rotor; a rotating shaft that is fixed to the rotor; a bearing that supports the rotating shaft; an impeller that is connected to the rotating shaft and compresses fluid; and a casing that accommodates the motor. In this compressor, the stator has: a coil that encircles the axis of the rotor; and a stator core that has a magnetic pole facing, in a radial direction of the rotor, an outer circumferential surface of the rotor, via a gap.

## Description

### Technical Field

This disclosure relates to a compressor.

### Background Art

There is a compressor, known to have a rotating shaft supported by a bearing, an impeller connected to the bearing, a rotor fixed to the bearing, and a stator provided outside relative to the rotor, and, in this compressor, the stator has a coil that is wound around a cylindrical stator core (see, for example, Patent Document 1).

### Related-Art Document

### Patent Document

Patent Document 1: Japanese Unexamined Patent Publication No. 2016-192877

### Summary of the Invention

### Problem to be Solved by the Invention

In a conventional compressor, the coil's ends, located in the rotor's axial direction (coil ends), stick out from the stator core in the axial direction. It then necessarily follows that the rotating shaft must stick out even more in the axial direction than the coil ends so that the bearing can support the rotating shaft, but this makes it difficult to shorten the rotating shaft.

The present disclosure therefore provides a compressor that can make the rotating shaft shorter.

### Means for Solving the Problem

A compressor according to the present disclosure has a motor that has a stator provided around an axis of a rotor; a rotating shaft that is fixed to the rotor; a bearing that supports the rotating shaft; an impeller that is connected to the rotating shaft and compresses fluid; and a casing that accommodates the motor. In this compressor, the stator has: a coil that encircles the axis of the rotor; and a stator core that has a magnetic pole facing, in the radial direction of the rotor, an outer circumferential surface of the rotor, via a gap.

According to the compressor of the present disclosure, the rotating shaft can be made shorter.

With the compressor of the present disclosure: the bearing is a radial bearing; the rotating shaft has a shaft portion supported by the radial bearing; and the shaft diameter of the shaft portion is larger than the outer diameter of the rotor.

According to the compressor of the present disclosure, the shaft diameter of the shaft portion is larger than the outer diameter of the rotor, so that the rotating shaft can be made shorter.

With the compressor of the present disclosure, the shaft diameter of the shaft portion is larger than the inner diameter of the stator.

According to the compressor of the present disclosure, the shaft diameter of the shaft portion is larger than the inner diameter of the stator, so that the rotating shaft can made even shorter.

With the compressor of the present disclosure, the radial bearing is a gas bearing.

According to the compressor of the present disclosure, the radial bearing is a gas bearing, so that the shaft diameter of the shaft portion can be increased easily.

With the compressor of the present disclosure: the stator core has a plate having a thickness in the axial direction of the rotor; and at least part of the plate portion, where the coil is projected onto the plate in the axial direction, contacts the casing.

According to the compressor of the present disclosure, at least part of the plate portion contacts the casing, so that the heat dissipation effect of releasing the heat of the coil and the stator core to the casing improves.

With the compressor of the present disclosure: the stator includes a plurality of stator units that have the same structure with each other and that are arrayed in the axial direction of the rotor, around the axis of the rotor; the plurality of stator units each include a pair of stator cores that face each other across the coil in the axial direction; and in each magnetic pole of the pair of stator cores, the position of the rotor in the circumferential direction is different from one another when viewed from the axial direction.

According to the compressor of the present disclosure, the plurality of stator units have the same structure with each other, so that it is possible to reduce the cost by standardizing and miniaturizing the mold for manufacturing the stator core.

With the compressor of the present disclosure, the motor has a non-magnetic material between adjacent stator units among the plurality of stator units.

According to the compressor of the present disclosure, a non-magnetic material is provided between adjacent stator units, so that it is possible to suppress an increase in magnetic flux leakage between adjacent stator units.

With the compressor of the present disclosure, the number of status units is two.

According to the compressor of the present disclosure, since the number of stator units is two, the rotating shaft can be made short compared to the example in which the number of stator cores is three or more.

With the compressor of the present disclosure, the rotor is an SPM (Surface Permanent Magnet)-type rotor, in which at least one permanent magnet is provided in the outer circumferential surface of the rotor.

According to the compressor of the present disclosure, the rotor is an SPM-type rotor, so that, by providing a protective sleeve or a retaining ring on the outer circumferential side of the permanent magnet, the centrifugal strength can be increased compared to an IPM (Interior Permanent Magnet)-type rotor, in which at least one permanent magnet is embedded in the rotor.

With the compressor of the present disclosure, the number of poles in each of a plurality status unit is two.

According to the compressor of the present disclosure, the number of poles in each of the plurality of stator units is two, so that the drive frequency can be reduced and is suitable for high speed, compared to the example in which the number of poles is four or more.

### Brief Description of the Drawings

FIG. 1 is a vertical cross-sectional view showing an example configuration of a turbo compressor according to a first embodiment;
FIG. 2 is a perspective view showing an example configuration of a motor;
FIG. 3 is an exploded perspective view showing an example configuration of the motor;
FIG. 4 is a diagram showing an example in which a non-magnetic material layer is provided between adjacent stator units;
FIG. 5 is a vertical cross-sectional view showing an example configuration of a turbo compressor according to a second embodiment;
FIG. 6 is a diagram for explaining the presence or absence of coil ends; and
FIG. 7 is a vertical sectional view showing an example configuration of one stator unit.

### Embodiment for Carrying Out the Invention

Now, embodiments will be described below.

### [First Embodiment]

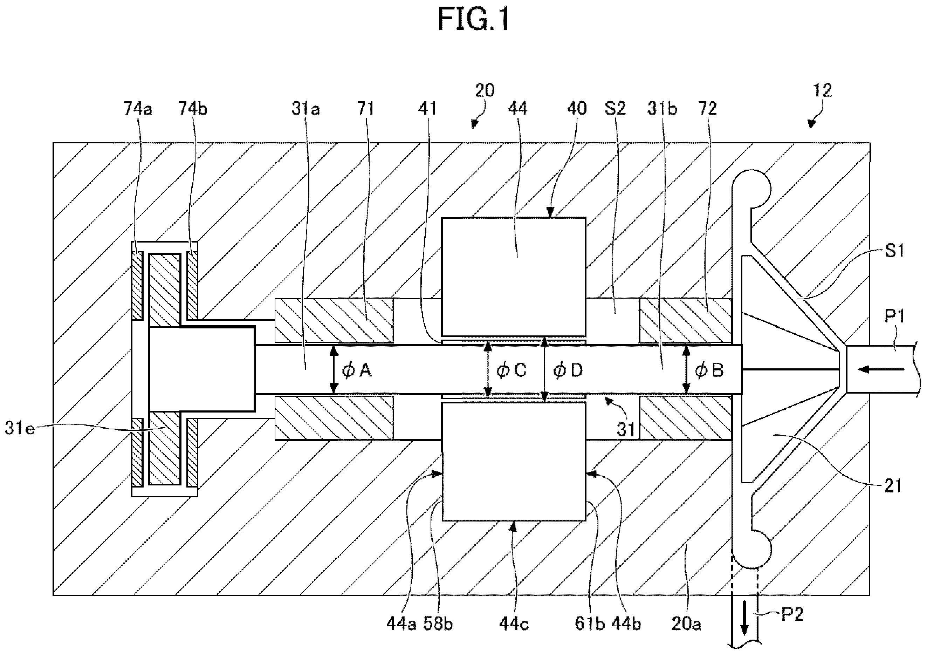

FIG. 1 is a vertical cross-sectional view showing an example configuration of a turbo compressor according to the first embodiment. A turbo compressor 12 is an example of a compressor. The turbo compressor 12 is a device provided in a refrigerant circuit of an air conditioner (not shown), and the refrigerant is compressed by an impeller 21. In this example, the turbo compressor 12 includes a casing 20, a rotating shaft 31, an impeller 21, a first radial bearing 71, a second radial bearing 72, a first thrust bearing 74a, a second thrust bearing 74b, and a motor 40.

In the following description, the "axial direction" refers to the direction of the axis of rotation, that is, the direction of the axis of the rotating shaft 31. The "radial direction" refers to a direction orthogonal to the axial direction of the rotating shaft 31. Also, the "outer circumferential side" is the side farther from the axis of the rotating shaft 31, and the "inner circumferential side" is the side closer to the axis of the rotating shaft 31.

The casing 20 is formed in a cylindrical shape with both ends closed, and provided so that the cylinder's axial line is oriented horizontally. The space inside the casing 20 is partitioned by a wall portion 20a. The space on the right side of the wall portion 20a (the first axial direction side) forms an impeller space S1 for accommodating the impeller 21. The space on the left side of the wall portion 20a (the second axial direction side, which is opposite of the first axial direction side) forms a motor space S2 for accommodating the motor 40. The motor 40, the first radial bearing 71, the second radial bearing 72, the first thrust bearing 74a, and the second thrust bearing 74b are accommodated in the motor space S2. The stator 44 of the motor 40, the first radial bearing 71, the second radial bearing 72, the first thrust bearing 74a, and the second thrust bearing 74b are fixed to the inner circumferential wall of the motor space S2.

The rotating shaft 31 is a shaft provided for rotationally driving the impeller 21, which is an example of load. In this example, the rotating shaft 31 extends in the axial direction inside the casing 20, and connects the impeller 21 and the rotor 41 of the motor 40. The rotating shaft 31 is fixed to the rotor 41 so that its axis is coaxial with the axis of the rotor 41 of the motor 40. To be more specific, the impeller 21 is fixed to one end part of the rotating shaft 31, and the motor 40 is provided in a middle part of the rotating shaft 31. Also, a disk-like portion (hereinafter also referred to as the "disk part 31e") is provided in the other end part of the rotating shaft 31 (that is, in the end part that is opposite to the one end part where the impeller 21 is fixed). Note that the disk part 31e is made of a magnetic material (for example, iron) when the first thrust bearing 74a and the second thrust bearing 74b are magnetic bearings.

The impeller 21 is formed such that a plurality of blades form a substantially conical outer shape, and is accommodated in the impeller space S1 while being fixed to one end part of the rotating shaft 31. A suction pipe P1 and a discharge pipe P2 are connected to the impeller space S1. The suction pipe P1 is provided to guide the refrigerant (an example of fluid) from the outside to the impeller space S1. The discharge pipe P2 is provided to return the high-pressure refrigerant (an example of fluid), compressed in the impeller space S1, to the outside. That is, in this example, the compressor mechanism is constituted by the impeller 21 and the impeller space S1.

The first radial bearing 71 is provided near one end part of the rotating shaft 31 (the left end part in FIG. 1), receives radial load from the rotating shaft 31, and rotatably supports the rotating shaft 31. The second radial bearing 72 is provided near the other end part of the rotating shaft 31, receives radial load from the rotating shaft 31, and rotatably supports the rotating shaft 31. The first radial bearing 71 is located on one axial direction side with respect to the motor 40 (the opposite side of the impeller 21 side). The second radial bearing 72 is located on the other axial direction side with respect to the motor 40 (the impeller 21 side).

The first radial bearing 71 rotatably supports the shaft portion 31a of the rotating shaft 31. The second radial bearing 72 rotatably supports the shaft portion 31b of the rotating shaft 31. The shaft portion 31a has a shaft diameter ϕA, and the shaft portion 31b has a shaft diameter ϕB. According to the first embodiment, shaft diameter ϕA is smaller than an outer diameter ϕC of the rotor 41 of the motor 40, and smaller than an inner diameter ϕD of the stator 44 of the motor 40. Shaft diameter ϕB is also smaller than outer diameter ϕC and smaller than inner diameter ϕD. Note that shaft diameter ϕA may be the same as outer diameter ϕC, and shaft diameter ϕB may be the same as outer diameter ϕC.

Although the first radial bearing 71 and the second radial bearing 72 are non-contact-type bearings (for example, gas bearings that allow shaft rotation with gas such as foil bearings, magnetic bearings that allow shaft rotation with magnetic force, etc.) so as to sufficiently cope with the high-speed rotation of the rotating shaft 31, but the first radial bearing 71 and the second radial bearing 72 may be contact-type bearings as well (for example, rolling bearings).

The first thrust bearing 74a and the second thrust bearing 74b receive axial load, and support the disk parts 31e of the rotating shaft 31 from both sides in the axial direction. The first thrust bearing 74a is located on one side in the axial direction with respect to the disk part 31e (the opposite side of the impeller 21 side), and the second thrust bearing 74b is located on the other side in the axial direction with respect to the disk part 31e (the impeller 21 side). The first thrust bearing 74a and the second thrust bearing 74b are each formed in circles and face each other across the disk part 31e.

The first thrust bearing 74a and the second thrust bearing 74b are non-contact-type bearings (for example, gas bearings that allow shaft rotation with gas such as foil bearings, magnetic bearings that allow shaft rotation with magnetic force, etc.) so as to cope with the high-speed rotation of the rotating shaft 31, but the first radial bearing 71 and the second radial bearing 72 may be contact-type bearings as well (for example, rolling bearings).

In the event the first thrust bearing 74a and the second thrust bearing 74b are gas bearings, when the disk part 31e rotates following the rotation of the rotating shaft 31, a dynamic pressure is generated between the disk part 31e and the first thrust bearing 74a and between the disk part 31e and the second thrust bearing 74b. Using this dynamic pressure, the first thrust bearing 74a and the second thrust bearing 74b support the disk part 31e in a non-contact manner. In the state in which the disk part 31e is supported in a non-contact manner, there is a gap between the disk part 31e and the first thrust bearing 74a and between the disk part 31e and the second thrust bearing 74b.

When the first thrust bearing 74a and the second thrust bearing 74b are magnetic bearings, the disk part 31e is supported, in a non-contact manner, by the combined electromagnetic force of a first thrust electromagnet provided in the first thrust bearing 74a and a second thrust electromagnet provided in the second thrust bearing 74b.

The motor 40 is a permanent magnet synchronous motor having a rotor 41 and a stator 44, and drives the rotating shaft 31 rotationally. The motor 40 is an inner-rotor-type motor in which a stator 44 is provided around the axis of the rotor 41. The rotor 41 is fixed to the rotating shaft 31, and the stator 44 is fixed to the inner circumferential wall of the casing 20. The stator 44 is provided on the outside with respect to the radial direction of the rotor 41. The rotor 41 and the stator 44 are provided on axial lines that are coaxial with the rotating shaft 31, and face the radial direction of the rotating shaft 31.

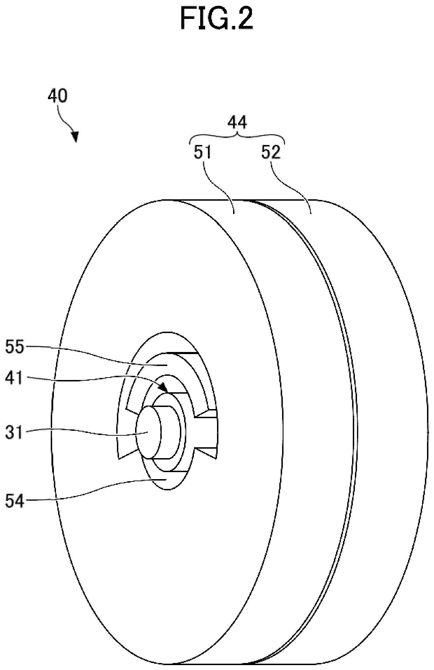

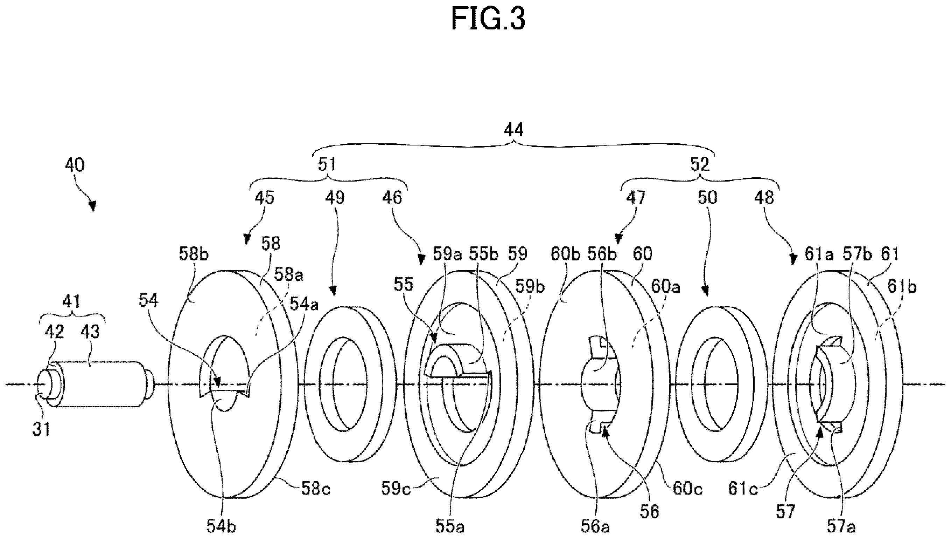

FIG. 2 is a perspective view showing an example configuration of a motor. FIG. 3 is an exploded perspective view of the motor shown in FIG. 2. The motor 40 shown in FIG. 2 and FIG. 3 is a claw magnetic pole-type motor.

The rotor 41 has a rotor core 42, and at least one permanent magnet 43 that is provided in the outer circumferential part of the rotor core 42.

The rotor core 42 is formed in a cylindrical shape by a magnetic material (for example, a laminated steel plate, cast iron, a dust core, etc.). A shaft hole for inserting the rotating shaft 31 is formed in the center part of the rotor core 42. The rotor core 42 has substantially the same length as the stator 44 in the axial direction of the rotor 41. The rotor core 42 is composed of one member in the axial direction. Also, the rotor core 42 may be composed of a plurality of members that are laminated in the axial direction (for example, the number of members here may correspond to the number of stator units, which will be described later).

A plurality of permanent magnets 43 are arranged at equal intervals, in the circumferential direction, in the outer circumferential surface of the rotor core 42. Also, the permanent magnets 43 are formed so as to be located substantially between one end and the other end of the rotor core 42 in the axial direction. The permanent magnets 43 are, for example, neodymium sintered magnets or ferrite magnets.

In each permanent magnet 43, its two radial ends are magnetized in different directions. Also, when two permanent magnets 43 are adjacent to each other in the circumferential direction among the permanent magnets 43, their respective radial outer sides facing the stator 44 are magnetized in different directions. Consequently, on the inner side of the stator 44 in the radial direction, permanent magnets 43, the outer side of which in the radial direction is magnetized in N direction, and permanent magnets 43, the outer side of which in the radial direction is magnetized in S direction, are arranged circumferentially adjacent to each other.

Each permanent magnet 43 may be composed of one magnet member in the axial direction, or may be composed of a plurality of magnet members that are divided in the axial direction (for example, the number of magnet members here may correspond to the number of members of the rotor core 42 laminated). In this case, the respective radial outer sides of the magnet members constituting the permanent magnets 43 that are divided in the axial direction and face the stator 44 are all magnetized in the same direction.

Note that a plurality of permanent magnets 43 that are arranged in the circumferential direction may be replaced with a permanent magnet that is composed of one member in the circumferential direction and that is alternately magnetized in different directions in the circumferential direction, such as, for example, an annular ring magnet, a plastic magnet, and so forth. In this case, the permanent magnet that is composed of one member in the circumferential direction may be composed of one member in the axial direction too, so that one member may constitute the whole. Also, the permanent magnet that is composed of one member in the circumferential direction may be divided into a plurality of members in the axial direction, as in the case of providing a plurality of permanent magnets 43. Also, when a plastic magnet composed of one member in the radial direction is employed, the rotor core 42 may be omitted.

For example, the rotor 41 is an SPM-type rotor, in which a permanent magnet 43 is provided on the surface of the outer circumferential part (outer circumferential surface) of the rotor core 42. In this case, the permanent magnet 43 is exposed on the outer circumferential surface of the rotor core 42. Also, to prevent the permanent magnet 43 from falling by the centrifugal force produced by the rotation of the rotor 41, a protective sleeve or a retaining ring for holding the permanent magnet 43 onto the rotor core 42 may be provided on the outer circumferential side of the permanent magnet 43. The protective sleeve or holding ring is made of a non-magnetic material (for example, CFRP (Carbon Fiber Reinforced Plastic), GFRP (Glass Fiber Reinforced Plastic), SUS (Stainless Steel), titanium, Inconel (registered trademark), etc.).

In the examples shown in FIG. 2 and FIG. 3, the number of poles (the number of magnetic poles) of the stator units 51 and 52 included in the stator 44 is two each. At least one permanent magnet 43 is provided in the outer circumferential part of the rotor core 42 such that, in the outer circumferential surface of the rotor core 42, the N pole covers an angular region of about 180 degrees in the circumferential direction, and the S pole covers an angular region of about 180 degrees in the circumferential direction.

The stator 44 includes a plurality of stator units having the same structure with each other and arrayed in the axial direction of the rotor 41 around the axis of the rotor 41. In this example, the stator 44 is a two-phase stator structure including two stator units 51 and 52.

The stator unit 51 has a pair of stator cores 45 and 46 that face each other in the axial direction, and a coil 49 that is sandwiched between the pair of stator cores 45 and 46 in the axial direction. The stator unit 52 has a pair of stator cores 47 and 48 that face each other in the axial direction, and a coil 50 that is sandwiched between the pair of stator cores 47 and 48 in the axial direction.

The pair of stator cores 45 and 46 are provided so as to surround the coil 49. The pair of stator cores 47 and 48 are provided so as to surround the coil 50. The stator cores 45, 46, 47 and 48 are formed with, for example, dust cores. The status cores 45, 46, 47, and 48, being formed with dust cores, can reduce the iron loss at high frequencies.

The stator core 45 has an annular plate 58 that faces the axial direction, and a claw magnetic pole 54 that sticks out from the inner circumferential surface of the plate 58. The stator core 46 has an annular plate 59 that faces the axial direction, and a claw magnetic pole 55 that sticks out from the inner circumferential surface of the plate 59. The plate 58 has a plate inner surface 58a and a plate outer surface 58b that face opposite directions in the axial direction. The plate 59 has a plate inner surface 59a and a plate outer surface 59b that face opposite directions in the axial direction. The coil 49 is sandwiched between the plate inner surface 58a and the plate inner surface 59a while in contact with the plate inner surface 58a and the plate inner surface 59a.

The plate 58 has an annular outer circumferential part 58c. The outer circumferential part 58c is located on the radial outside with respect to the portion where the plate 58 and the coil 49 contact each other axially, and axially thicker than the portion where the plate 58 and the coil 49 contact each other axially. The plate 59 has an annular outer circumferential part 59c. The outer circumferential part 59c is located on the radial outside with respect to the portion where the plate 59 and the coil 49 contact each other axially, and axially thicker than the portion where the plate 59 and the coil 49 contact each other axially. When the outer circumferential part 58c and the outer circumferential part 59c are in contact with each other, the plate inner surface 58a and the plate inner surface 59a contact each other in the axial direction.

The stator core 47 has an annular plate 60 that faces the axial direction, and a claw magnetic pole 56 that sticks out from the inner circumferential surface of the plate 58. The stator core 48 has an annular plate 61 that faces the axial direction, and a claw magnetic pole 57 that sticks out from the inner circumferential surface of the plate 61. The plate 60 has a plate inner surface 60a and a plate outer surface 60b that face opposite directions in the axial direction. The plate 61 has a plate inner surface 61a and a plate outer surface 61b that face opposite directions in the axial direction. The coil 50 is fixed between the plate inner surface 60a and the plate inner surface 61a while in contact with the plate inner surface 60a and the plate inner surface 61a.

The plate 60 has an annular outer circumferential part 60c. The outer circumferential part 60c is located on the radial outside with respect to the portion where the plate 60 and the coil 50 contact each other axially, and axially thicker than the portion where the plate 60 and the coil 50 contact each other axially. The plate 61 has an annular outer circumferential part 61c. The outer circumferential part 61c is located on the radial outside with respect to the portion where the plate 61 and the coil 50 contact each other axially, and axially thicker than the portion where the plate 61 and the coil 50 contact each other axially. When the outer circumferential part 60c and the outer circumferential part 61c are in contact with each other, the plate inner surface 60a and the plate inner surface 61a contact each other in the axial direction.

The plate 58 is a back yoke part having an annular shape when viewed from the axial direction, and having a predetermined thickness in the axial direction of the rotor 41.

A claw magnetic pole 54 is provided in the inner circumferential surface of the plate 58, covering an angular range of less than 180 degrees and sticking out radially inwardly from the inner circumferential surface of the plate 58.
The claw magnetic pole 54 faces, in the radial direction of the rotor 41, the outer circumferential surface of the rotor 41 via a gap. The claw magnetic pole 54 includes a claw magnetic pole part 54a.

The claw magnetic pole part 54a (an example of the first claw magnetic pole part) has a predetermined width, and sticks out radially inwardly from the inner circumferential surface of the plate 58 by a predetermined length.

Also, the claw magnetic pole 54 further includes a claw magnetic pole part 54b. By this means, it is possible keep the area where the magnetic pole surface of the claw magnetic pole 54, magnetized by the armature current of the coil 49, and the rotor 41 face each other, relatively wide. Therefore, the torque of the motor 40 can be increased relatively, and the output of the motor 40 can be improved.

The claw magnetic pole part 54b (an example of the second claw magnetic pole) sticks out in a curved shape, by a predetermined length, in the axial direction, from the inner tip of the claw magnetic pole part 54a in the radial direction, toward the stator core 46. For example, as shown in FIG. 2 and FIG. 3, the claw magnetic pole part 54b sticks out by keeping a constant curved width (to be more specific, an arc length), regardless of the distance from the claw magnetic pole part 54a. Alternatively, the claw magnetic pole part 54b may stick out in a tapered shape, in which its curved width (to be more specific, an arc length) becomes narrower as the claw magnetic pole part 54b gets more distant from the claw magnetic pole part 54a in the axial direction.

The stator cores 45, 46 and 47 have the same shape as the stator core 48, and therefore the description of the stator cores 45, 46 and 47 will be simplified by referring to the above description of the stator core 48. To explain briefly, the plates 59, 60 and 61 have the same shape as the plate 58, and the claw magnetic poles 55, 56 and 57 have the same shape as the claw magnetic pole 54. The claw magnetic poles 54, 55, 56 and 57 each face, in the radial direction of the rotor 41, the outer circumferential surface of the rotor 41 via a gap. The claw magnetic pole 55 includes claw magnetic pole parts 55a and 55b. The claw magnetic pole 56 includes claw magnetic pole parts 56a and 56b. The claw magnetic pole 57 includes claw magnetic pole parts 57a and 57b. Note that the claw magnetic pole parts 54b, 55b, 56b, 57b may be omitted.

The coils 49 and 50 are conductive lines that encircle the axis of the rotor 41. Both ends of the coil 49 are electrically connected to external terminals of the motor 40. The external terminals of the motor 40 are electrically connected to a drive device (for example, an inverter, etc.) that drives the motor 40 with electric power supplied from a power source. The same applies to the coil 50.

The coil 49 is provided between the pair of stator cores 45 and 46 in the axial direction. The coil 49 is wound so that an outer circumferential part of the coil 49 is located on the inner side relative to the outer circumferential parts 58c and 59c of the pair of stator cores 45 and 46 in the radial direction, and an inner circumferential part of the coil 49 is located on the outer side relative to the outer circumferential parts of the claw magnetic poles 54 and 55 in the radial direction. Similarly, the coil 50 is provided between the pair of stator cores 47 and 48 in the axial direction. The coil 50 is wound so that an outer circumferential part of the coil is located on the inner side relative to the outer circumferential parts 60c and 61c of the pair of stator cores 47 and 48 in the radial direction, and an inner circumferential part of the coil is located on the outer side relative to the outer circumferential parts of the claw magnetic poles 56 and 57 in the radial direction.

As shown in FIG. 3, the pair of stator cores 45, 46 are combined so that the claw magnetic pole 54 of one stator core 45 and the claw magnetic pole 55 of the other stator core 46 are provided to be adjacent to each other in the circumferential direction. Also, when an armature current flows in the annular coil 49, between the pair of stator cores 45 and 46, the claw magnetic pole 54 of one stator core 45 and the claw magnetic pole 55 of the other stator core 46 are magnetized in different directions. By this means, where there are a pair of stator cores 45 and 46, one claw magnetic pole 54 that sticks out from one stator core 45 is magnetized in a different direction from the one claw magnetic pole 55 that sticks out from the other stator core 46 located adjacent to the stator core 45 in the circumferential direction. Therefore, the combination of the N-pole claw magnetic pole 54 and the S-pole claw magnetic pole 55 and the combination of the N-pole claw magnetic pole 55 and the S-pole claw magnetic pole 54 are alternately generated by the armature current flowing in the coil 49.

As shown in FIG. 2 and FIG. 3, a plurality of stator units 51 and 52 are laminated axially.

The stator 44 includes stator units 51 and 52 for a plurality of phases (two phases in FIG. 2 and FIG. 3). To be more specific, the stator 44 includes a stator unit 51 that corresponds to the U phase and a stator unit 52 that corresponds to the V phase. The two stator units 51 and 52 corresponding to different phases are provided so that their locations in the circumferential direction differ by 90 degrees in terms of electrical angle.

Note that the number of phases of the motor 40 is not limited to two, and may be three or more.

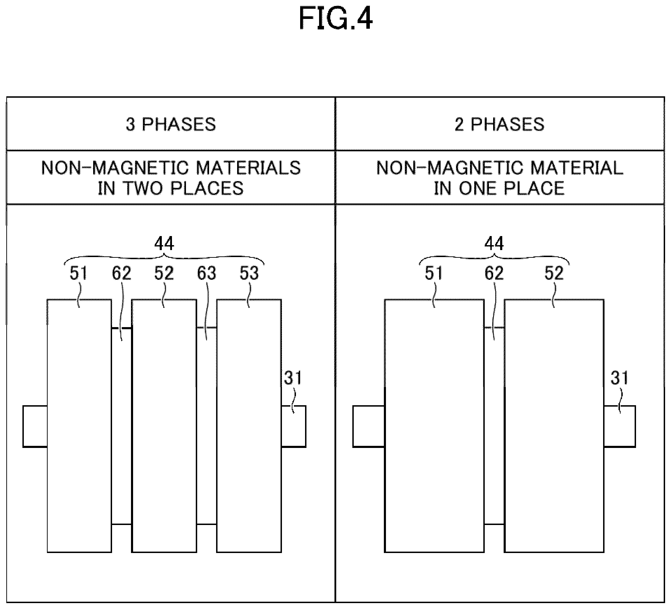

FIG. 4 is a diagram showing an example in which a non-magnetic material layer is provided between adjacent stator units. In the event the motor 40 supports two phases, the stator 44 includes stator units 51 and 52 for two phases, having the same structure with each other. The two-phase motor 40 may have a non-magnetic layer 62 between the stator units 51 and 52 that are adjacent to each other in the axial direction. With the non-magnetic layer 62, it is possible to suppress magnetic flux leakage between the two adjacent stator units 51 and 52 corresponding to different phases.

In the event the motor 40 supports three phases, the stator 44 includes stator units 51, 52, and 53 for three phases, each of the units having the same structure. The three-phase motor 40 has a non-magnetic material layer 62 between the stator units 51 and 52 that are adjacent to each other in the axial direction, and has a non-magnetic material layer 63 between the stator units 52 and 53 that are adjacent to each other in the axial direction. With the non-magnetic layer 62, it is possible to suppress magnetic flux leakage between the two adjacent stator units 51 and 52 corresponding to different phases. With the non-magnetic layer 63, it is possible to suppress magnetic flux leakage between the two adjacent stator units 52 and 53 corresponding to different phases.

The non-magnetic material layer 62 is a U-V phase member provided between the U-phase stator unit 51 and the V-phase stator unit 52, which are adjacent to each other in the axial direction. The non-magnetic material layer 62 has, for example, a substantially cylindrical shape (substantially disk shape) having a predetermined thickness, and an insertion hole for inserting the rotation shaft 31 is formed in the central portion. The same may apply to the non-magnetic material layer 63. The non-magnetic material layer 63 is a V-W phase member provided between the V-phase stator unit 52 and the W-phase stator unit 53, which are adjacent to each other in the axial direction.

### [Second Embodiment]

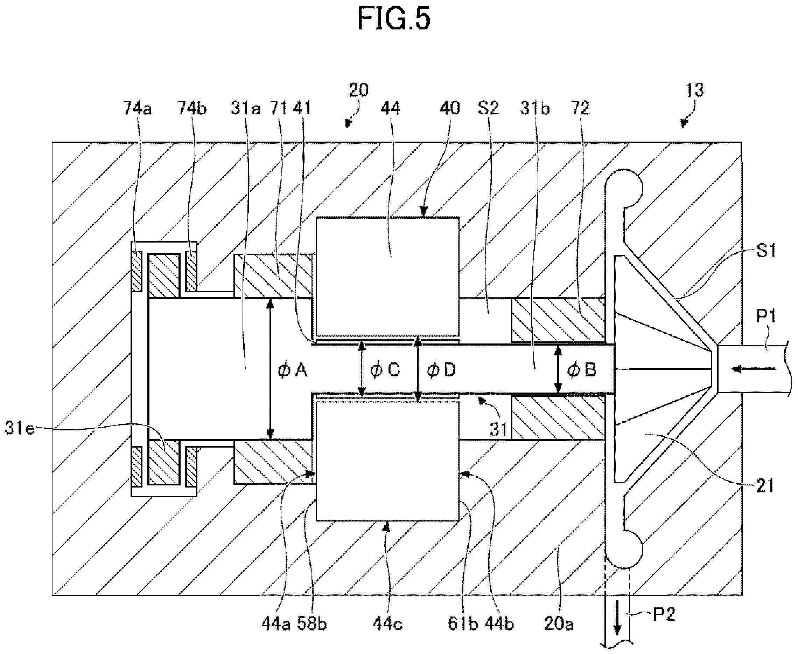

FIG. 5 is a vertical cross-sectional view showing an example configuration of a turbo compressor according to a second embodiment. The description of components that are similar to those of the above-described embodiment will be omitted or simplified by referring to the above description. In the turbo compressor 13 according to the second embodiment, shaft diameter ϕA of the shaft portion 31a of the rotating shaft 31 is different from that in the turbo compressor 12 of the first embodiment.

In the second embodiment, shaft diameter ϕA is larger than outer diameter ϕC of the rotor 41 of the motor 40, and larger than inner diameter ϕD of the stator 44 of the motor 40. Shaft diameter ϕA may be larger than outer diameter ϕC, and may be the same as inner diameter ϕD or smaller than inner diameter ϕD.

### [Working and effect of each embodiment]

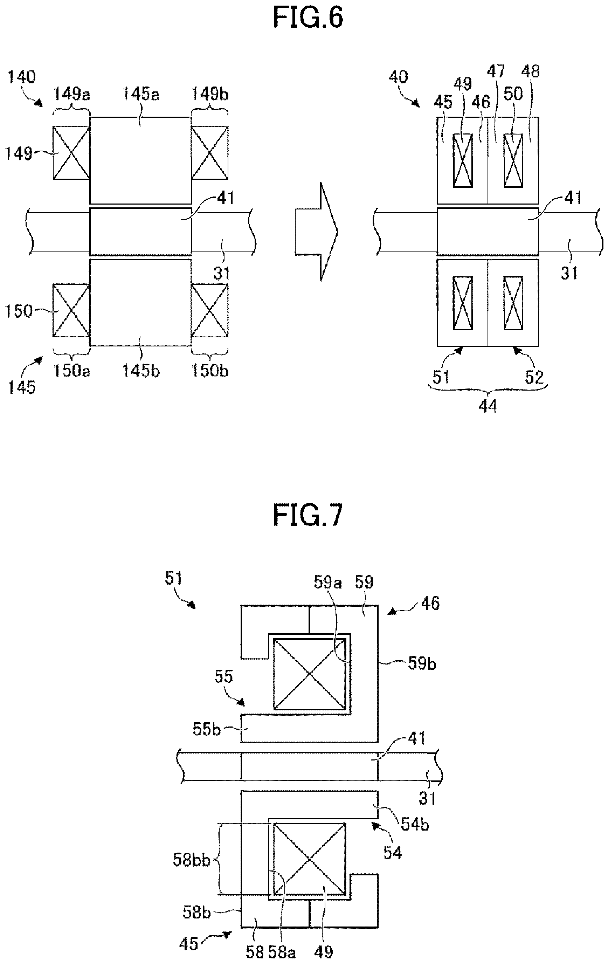

FIG. 6 is a diagram for explaining the presence or absence of coil ends. In a conventional motor 140, the ends (coil ends 149a, 149b, 150a, and 150b) of coils 149 and 150 in the axial direction of a rotor 41 stick out from a stator core 145 in the axial direction. This is because the coils 149 and 150 encircle the teeth 145a and 145b (the central axis in the radial direction) of the stator core 145. Therefore, the rotating shaft 31 must stick out further, in the axial direction, from each coil end so that the bearing can support the rotating shaft 31, and this makes it difficult to make the rotating shaft 31 shorter.

On the other hand, in the motor 40 of each embodiment, the coils 49 and 50 encircle the axis of the rotor 41, and therefore do not stick out in the axial direction from the stator cores 45, 46, 47, and 48 (hence the coils are "endless")). Therefore, space for providing the first radial bearing 71 and the second radial bearing 72 that support the rotating shaft 31 can be secured on both sides of the motor 40 in the axial direction, so that the first radial bearing 71 and the second radial bearing 72 can be brought closer to the sides of the motor 40 in the axial direction. As a result of this, the parts of the shaft supported by the first radial bearing 71 and the second radial bearing 72 can be brought closer to the motor 40, and the rotating shaft 31 can be made shorter. By making the rotating shaft 31 shorter, the resonance of the rotating shaft 31 can be suppressed, and the speed of the rotating shaft 31 can be increased.

Also, as shown in FIG. 5, shaft diameter ϕA of the shaft portion 31a may be larger than outer diameter ϕC of the rotor 41. By making the coils thus "end-less," it is possible to secure a space for providing the first radial bearing 71, so that shaft diameter ϕA can be increased. As shaft diameter ϕA becomes larger, the surface area of the shaft portion 31a supported by the first radial bearing 71 increasing. If the weight of the support supported by the bearing does not change, the rotating shaft 31 can be made shorter given the increase of the surface area of the shaft portion 31a.

Also, as shown in FIG. 5, shaft diameter ϕA of the shaft portion 31a may be larger than inner diameter ϕD of the stator 44. By this means, the surface area of the shaft portion 31a is further expanded, so that the rotating shaft 31 can be made even shorter.

Also, the first radial bearing 71 and the second radial bearing 72 may be gas bearings. A gas bearing has a simpler structure than a magnetic bearing, and therefore the shaft diameter of the rotating shaft 31 can be increased easily. Consequently, this is advantageous in shortening the rotation shaft 31.

Also, as shown in FIG. 3, in the pair of stator cores 45 and 46 in the stator unit 51, the stator core 45, which is the outer one in the axial direction, has a plate 58 that faces the axial direction of the rotor 41. FIG. 7 is a vertical sectional view showing an example configuration of the stator unit 51. At least part of the plate portion 58bb, where the coil 49 is projected axially onto the plate 58, contacts the casing 20 in a plate outer surface 58b, as shown in FIG. 1 and FIG. 5. To be more specific, at least part of the plate portion 58bb contacts the inside of the casing 20 in the plate outer surface 58b located in one stator end surface 44a of the stator 44. By this means, the heat dissipation effect of releasing the heat of the coil 49 and the stator cores 45 and 46 to the casing 20 improves, compared to the example in which only the stator outer circumferential surface 44c of the stator 44 contacts the casing 20.

Also, as shown in FIG. 3, in the pair of stator cores 47 and 48 in the stator unit 52, the stator core 48, which is the outer one in the axial direction, has a plate 61 that faces the axial direction of the rotor 41. At least part of the plate portion, where the coil 50 is projected axially onto the plate 61, contacts the casing 20 in a plate outer surface 61b, as shown in FIG. 1 and FIG. 5. To be more specific, at least part of the plate portion contacts the inside of the casing 20 in the plate outer surface 61b located in one stator end surface 44b of the stator 44. By this means, the heat dissipation effect of releasing the heat of the coil 50 and the stator cores 47 and 48 to the casing 20 improves, compared to the example in which only the stator outer circumferential surface 44c of the stator 44 contacts the casing 20.

In each embodiment, the stator 44 includes a plurality of stator units having the same structure with each other. The stator units have stator cores 45, 46, 47, and 48 having magnetic poles that face the radial direction of the rotor 41 via the outer circumferential surface of the rotor 41 and a gap. In each of the claw magnetic poles 54, 55, 56, and 57 of the stator units, the position of the rotor 41 in the circumferential direction is different from one another when viewed from the axial direction. By providing the stator units in the same structure with each other, it is possible to reduce the cost by standardizing and miniaturizing the mold for manufacturing the stator cores 45, 46, 47, and 48.

In each embodiment, as shown in FIG. 4, the motor 40 has a non-magnetic material layer 62 between adjacent stator units among a plurality of stator units. Since a non-magnetic material layer 62 is provided between adjacent stator units, it is possible to suppress an increase in magnetic flux leakage between adjacent stator units due to the shortening of the rotating shaft 31. The same effect can be obtained with a non-magnetic material layer 63 as well.

In each embodiment, the number of stator units may be two. By this means, the rotation shaft 31 can be made short compared to the example in which the number of status units is three or more.

In each embodiment, the rotor 41 may be an SPM-type rotor, in which at least one permanent magnet 43 is provided in an outer circumferential surface of the rotor 41. By making the type of the rotor 41 an SPM-type rotor, the centrifugal strength increases by providing a protective sleeve or a retaining ring on the outer circumferential side of the permanent magnet, compared to an IPM-type rotor in which at least one permanent magnet is embedded in the rotor.

In each embodiment, the number of poles (to be more specific, the number of claw magnetic poles) in each stator unit may be two. In FIG. 3, the stator units 51 and 52 each have two claw magnetic poles, so that the number of poles in each of the stator units 51 and 52 is two. By setting the number of poles to two, the drive frequency of the motor can be reduced and is suitable for high speed, compared to the example in which the number of poles is four or more.

Although embodiments have been described above, it should be understood that various changes in form and details are possible without departing from the purpose and scope of the claims. Various modifications and improvements such as combinations and replacements with part or all of other embodiments are possible.

This international application is based and claims priority to Japanese Patent Application No. 2020-024633, filed on February 17, 2020, and the entire contents of Japanese Patent Application No. 2020-024633 are incorporated in this international application by reference.

### Reference Signs List

- 12, 13: turbo compressor
- 20: casing
- 20a: wall
- 21: impeller
- 31: rotating shaft
- 31a, 31b: shaft portion
- 31e: disk part
- 40: motor
- 41: rotor
- 42: rotor core
- 43: permanent magnet
- 44: stator
- 44a, 44b: stator end surface
- 44c: stator outer circumferential surface
- 45-48: stator core
- 49, 50: coil
- 51-53: stator unit
- 54-57: claw magnetic pole
- 54a-57a, 54b-57b: claw magnetic pole part
- 58-61: plate
- 58a-61a: plate inner surface
- 58b-61b: plate outer surface
- 58bb: plate portion
- 58c-61c: outer circumferential part
- 62, 63: non-magnetic material layer
- 71: first radial bearing
- 72: second radial bearing
- 74a: first thrust bearing
- 74b: second thrust bearing
- 140: motor
- 145: stator core
- 145a, 145b: tooth
- 149, 150: coil
- 149a, 149b, 150a, 150b: coil end
- P1: suction pipe
- P2: discharge pipe
- S1: impeller space
- S2: motor space

## Claims

1. A compressor comprising:
a motor that has a stator provided around an axis of a rotor;
a rotating shaft that is fixed to the rotor;
a bearing that supports the rotating shaft;
an impeller that is connected to the rotating shaft and compresses fluid; and
a casing that accommodates the motor,
wherein the stator has:
a coil that encircles the axis of the rotor; and
a stator core that has a magnetic pole facing, in a radial direction of the rotor, an outer circumferential surface of the rotor, via a gap.

2. The compressor according to claim 1,
wherein the bearing is a radial bearing, wherein the rotating shaft has a shaft portion supported by the radial bearing, and
wherein a shaft diameter of the shaft portion is larger than an outer diameter of the rotor.

3. The compressor according to claim 2, wherein the shaft diameter of the shaft portion is larger than an inner diameter of the stator.

4. The compressor according to claim 2 or 3, wherein the radial bearing is a gas bearing.

5. The compressor according to any one of claims 1 to 4,
wherein the stator core has a plate having a thickness in an axial direction of the rotor, and
wherein at least part of a plate portion, where the coil is projected onto the plate in the axial direction, contacts the casing.

6. The compressor according to any one of claims 1 to 5,
wherein the stator includes a plurality of stator units that have a same structure and that are arrayed in the axial direction of the rotor, around the axis of the rotor,
wherein the plurality of stator units each include a pair of stator cores that face each other across the coil in the axial direction, and
wherein, in each magnetic pole of the pair of stator cores, a position of the rotor in a circumferential direction is different from one another when viewed from the axial direction.

7. The compressor according to claim 6, wherein the motor has a non-magnetic material between adjacent stator units among the plurality of stator units.

8. The compressor according to claim 6 or 7, wherein the plurality of stator units is two in number.

9. The compressor according to any one of claims 6 to 8, wherein poles of each of the plurality of stator units is two in number.

10. The compressor according to any one of claims 1 to 9, wherein the rotor is an SPM-type rotor, in which at least one permanent magnet is provided in the outer circumferential surface of the rotor.
